(19) Europäisches Patentamt
European Patent Office
Office européen des brevets

(11) **EP 2 796 848 B1**

(12) **EUROPEAN PATENT SPECIFICATION**

(45) Date of publication and mention
of the grant of the patent:
**27.12.2017 Bulletin 2017/52**

(51) Int Cl.:
*G01M 3/32* *(2006.01)*     *F02M 25/08* *(2006.01)*

(21) Application number: **13382152.0**

(22) Date of filing: **25.04.2013**

(54) **Method and system for monitoring the integrity of a pressurised tank**

Verfahren und System zur Überwachung der Unversehrtheit eines unter Druck stehenden Tanks

Procédé et système de surveillance de l'intégrité d'un réservoir sous pression

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.10.2014 Bulletin 2014/44**

(73) Proprietor: **The Boeing Company**
**Chicago, IL 60606-1596 (US)**

(72) Inventors:
• **Pena Ortiz, Nicolas**
**Seville 41010 (ES)**
• **Troncoso, Enrique**
**Seville 41007 (ES)**

(74) Representative: **Boult Wade Tennant**
**Verulam Gardens**
**70 Gray's Inn Road**
**London WC1X 8BT (GB)**

(56) References cited:
WO-A1-2011/080188     WO-A1-2011/135210
JP-A- 2002 181 296     US-A- 5 411 004
US-A1- 2002 179 177     US-A1- 2006 132 351
US-A1- 2007 113 918     US-A1- 2008 196 482
US-A1- 2011 308 302     US-A1- 2012 226 451
US-B1- 6 695 017     US-B1- 8 371 272

**Description**

**FIELD OF INVENTION**

The present invention relates to monitoring the integrity of a pressurised tank. The present invention is particularly suited for monitoring the integrity of pressurized gas tanks used in fuel-cell powered vehicles.

**BACKGROUND OF INVENTION**

There are hazards associated with storing any fluid under pressure in a pressurised tank. These hazards are even more acute in the case of highly flammable and potentially explosive gases, such as hydrogen. The integrity of the pressurised tank must be ensured at all times to minimise the risk of accident. For example, minor damage may lead to the escape of gas from the tank that may collect and cause an explosion if ignited.

Also, minor damage such as a small crack in the pressurised tank may present a point of weakness that could lead to catastrophic sudden failure of the tank. This is a particular problem for pressurised tanks fitted to vehicles that may receive accidental impacts. For example, fuel-cell powered vehicles have pressurised gas tanks that store hydrogen fuel.

It is, therefore, important for the user of a pressurised tank to have a system in place for inspecting the pressurised tank to check for damage. Currently, such inspections are generally performed visually by an operator, for example, when the pressurised tank is being serviced.

There are numerous problems with relying on visual inspection to ascertain the integrity of a pressurised tank. For example, pressurised tanks may be housed internally within a vehicle and so are not easily accessible for inspection. This means that the inspections are time consuming and result in the pressurised tank and the vehicle being out of action for some time.

It would, therefore, be desirable to have a method for determining the integrity of a pressurised tank which overcomes the above problems.

US 5,411,004 and US 2011/0308302 describe testing the integrity of a fuel tank by measuring the pressure in the headspace as air is pumped into the fuel tank. Any leak in the fuel tank will be detected as the pressure in the head space will not rise as quickly as expected.

US 2008/0196482 measures the pressure in a fuel tank as air and fuel vapour are pumped out from the fuel tank. A leak will be detected as the pressure will not fall as quickly as expected. US 8,371,272 evacuates the air and fuel vapour from a fuel tank, and then monitors the pressure in the fuel tank. A leak will be detected as the pressure in the fuel tank will rise if a leak is present.

**SUMMARY OF INVENTION**

According to a first aspect of the invention, there is provided a method of checking the integrity of a pressurised tank using pressure measurements obtained during a filling process. The method comprises obtaining pressure measurements indicating a series of pressures inside the pressurised tank at different times during the filling process as the pressurised tank is being filled, thereby describing a measured pressure profile of the filling process. The measured pressure profile is compared against a reference pressure profile that indicates an expected series of pressures inside the pressurised tank at different times during a filling process. This comparison allows a determination as to whether the measured and reference pressure profiles correspond. The comparison is used to provide an indication of the integrity of the pressurised tank.

Thus, the integrity of the pressurised tank may be checked by measuring the pressure changes in the pressurised tank during the filling process, and seeing whether the pressure changes match an expected pressure profile for the filling process. Deviations from the expected pressure profile may be indicative of a failure in the integrity of the pressurised tank. For example, the measured pressure profile may be compared against the reference pressure profile to determine whether the measured and reference pressure profiles correspond. If the measured and reference pressure profiles are found to correspond, the integrity of the pressurised tank may be confirmed. If the measured and reference pressure profiles are found not to correspond, a problem with the integrity of the pressurised tank may be reported.

Optionally, the measured pressure profile may be compared against the reference pressure profile to determine by how much they differ. A problem with the integrity of the pressurised tank may be reported if the measured and reference pressure profiles are found to differ by more than a predetermined threshold. The measured pressure profile may be compared against the reference pressure profile to characterise how the profiles differ.

In addition to indicating a problem with the integrity of the pressurised tank, an indication of the type of problem may also be reported based on the characteristic of the difference between the measured and reference pressure profiles. For example, if the measured pressure profile is found to rise at a slower rate than the reference pressure profile, a leak in the pressurised tank may be reported. An indication of the size of the leak may be reported based on how much slower the rate of increase in the measured pressure profile is found to be and/or how close to the expected maximum pressure the pressure profile rises. If the measured pressure profile is found to rise faster than expected, an over-temperature condition of the pressurised tank may be reported corresponding to the temperature of the pressurised tank being above an accepted range. Oscillations in the measured pressure profile may be indicative of a valve that is sticking shut.

The reference pressure profile may be generated in different ways. For example, the reference pressure profile may have been measured previously. The reference pressure profile may have been measured during an earlier filling of the pressurised tank from which the measured pressure profile is taken, for example when the pressurised tank was filled when it was new or at a time when the pressurised tank was known or assumed to be in a good condition. A record may be kept of the measured pressure profiles of a number of previous fills. This may be all of the previous fills or just a selection of the previous fills, like a number of the most recent fills, say the ten most recent fills. The profiles may be stored in a first in first out buffer. The profiles may then be combined, for example through averaging, to produce a reference pressure profile against which the current measured pressure profile may be compared.

Alternatively, the reference pressure profile may have been measured from a representative tank, for example one from the same manufacturing batch or one of the same type.

The reference pressure profile need not be measured, but could be obtained from calculation, for example through computer modelling or simulation. This simulation may be performed while the pressurised tank is being filled. For example, the current temperature of the pressurised tank may be measured and used in the calculation.

The method may further comprise filling the pressurised tank with a fluid and measuring pressures inside the pressurised tank during the filling process thereby obtaining the pressure measurements. Optionally, the method further comprises controlling the filling process based upon the indication of the integrity of the pressurised tank. For example, the method may comprise stopping the filling process upon a report of a problem with the integrity of the pressurised tank. To allow continual monitoring of the filling process, the above method steps may be repeated such that the integrity of the pressurised tank is checked repeatedly during the filling process. For example, the measured pressure profile will constantly update as new pressure measurements are received. In addition, new temperature measurements may be received and the reference pressure profile may also be updated as new temperature measurements are received. The filling process may then be stopped when a report issues that indicates a problem with the integrity of the pressurised tank.

The above method enjoys many applications. For example, the above method may be used to fill a fuel tank of a fuel-cell powered vehicle. Thus, the method may comprise connecting a filling station to the pressurised gas tank of a fuel-cell powered vehicle, and using the filling station to perform the filling process. The pressurised gas tank may be filled with pressurised hydrogen. Alternatively, the above method may be used to fill a fuel tank of a liquid petroleum gas powered vehicle. Thus, the method may comprise connecting a filling station to the pressurised tank of the vehicle, and using the filling station to perform the filling process by filling the pressurised tank with liquid petroleum gas.

Any of the above methods may also comprise retrieving information pertaining to the pressurised tank from a memory device provided on the pressurised tank. Many different types of memory device may be used, and may be configured for wired or wireless connection. Preferably, the memory device is an RF-ID tag. The information stored on the memory device may include a reference pressure profile for the tank. or a historical record of reference pressure profiles as described above. For example, the memory device may have stored thereon a record of the pressure profiles from the ten most recent fills, optionally in a first in first out buffer. Other information such as the type and/or capacity of the pressurised tank, and the fluid stored in the pressurised tank may also be stored in the memory device. The memory device may also provide the temperature of the tank. For example, if the memory device is an RF-ID tag, the tag may provide power to the a temperature sensor and the temperature measurements may be transmitted by the RF-ID tag. The present invention may further comprise storing the indication of the integrity of the pressurised tank on the memory device.

The method may further comprise monitoring the pressure at an outlet of the pressurised tank during the filling process. This may be done, for example, to ensure that the pressure remains within the operating range required for a fuel cell.

As will be appreciated, the present invention has wide application. The fluid stored in the pressurised tank may be a liquid or a gas. The fluid may be a fuel such as pressurised hydrogen gas or liquid petroleum gas.

The present invention also resides in a computer program which, when executed by a computer processor, causes the computer processor to carry out any of the above methods, and a computer readable memory storage device having stored thereon such a computer program.

From another aspect, the present invention resides in a computer system programmed to implement any of the above methods. The present invention also resides in a filling station for filling a pressurised tank with a fluid. The filling station includes the computer system described above. The filling station further comprises a storage tank for containing fluid to be delivered, a connection with an outlet configured to connect the storage tank to a pressurised tank to be filled via the outlet, and a regulator configured to regulate flow of the fluid from the storage tank to the outlet. The computer system is programmed to operate the regulator to allow the pressurised tank to be filled with the fluid and, optionally, to control the regulator based upon the indication of the integrity of the pressurised tank.

For example, the processor may use the regulator to stop the filling process upon finding a problem with the integrity of the pressurised tank, as described above.

The filling station may further comprise a pressure sensor configured to make the pressure measurements and to provide the pressure measurements to the computer system. Alternatively, the filling station may further comprise a receiver configured to receive the pressure measurements and to provide the pressure measurements to the computer system. The pressure measurements may be provided by a pressure sensor of the pressurised tank.

The present invention also resides in the combination of a pressurised tank and any of the filling stations described above. The pressurised tank may comprise an inlet for connection to the outlet of the filling station, and a pressure sensor operable to make the pressure measurements. The filling station may further comprise a connection for connecting the computer system to the pressure sensor so that the computer system may receive the pressure measurements provided by the pressure sensor.

The pressurised tank may further comprise an RF-ID device having a memory and a transmitter. The memory of the RF-ID device may contain data defining the reference pressure profile and/or data corresponding to a historical record of measured pressure profiles like that described above, and the transmitter may be configured to transmit the data. Then, the filling station may have an RF receiver configured to receive the data and to provide the data to the computer system. Other transmitter and receiver types may be used, both wireless and wired, electrical and optical.

The pressurised tank may further comprise a temperature sensor configured to take temperature measurements of the pressurised tank. The transmitter may be configured to transmit the temperature measurements, and the RF receiver may be configured to receive the temperature measurements and to provide the temperature measurements to the computer system. These temperature measurements may be used to generate the reference pressure profile, as described above.

From another aspect, the present invention resides in a pressurised tank comprising a vessel for storing a quantity of fluid under pressure, an inlet configured to allow the vessel to be filled, memory means and a transmitter. The memory means contain data defining a reference pressure profile indicating a series of expected pressures inside the pressurised tank at different times during a filling process when the pressurised tank is being filled. The memory means may contain data corresponding to a historical record of measured pressure profiles obtained during previous fills, from which a reference pressure profile may be generated to indicate a series of expected pressures inside the pressurised tank at different times during a filling process when the pressurised tank is being filled. This record may be all of the previous fills or just a selection of the previous fills, like a number of the most recent fills, say the ten most recent fills. The profiles may be stored in a first in first out buffer. The profiles may then be combined, for example through averaging, to produce a reference pressure profile. The transmitter is configured to transmit the data defining the reference pressure profile.

The pressurised tank may further comprise a temperature sensor configured to obtain temperature measurements of the pressurised tank and/or a pressure sensor configured to obtain pressure measurements of the pressurised tank. The transmitter may be configured to transmit the temperature measurements and/or pressure measurements.

The present invention also resides in a vehicle having one of the pressurised tanks described above. In particular, the present invention resides in an air vehicle having one of the pressurised tanks described above, such as a fuel cell-powered air vehicle. The air vehicle may be an unmanned air vehicle.

## BRIEF DESCRIPTION OF DRAWINGS

Preferred embodiments of the present invention shall now be described, by way of example only, with reference to the accompanying drawings, in which:

Figure 1 is a schematic representation of a pressurised tank for use with the present invention;

Figure 2 illustrates the pressurised tank of Figure 1 when connected to a filling station according to an embodiment of the present invention;

Figure 3a is a flow chart illustrating a method of filling a pressurised tank and of checking the integrity of the pressurised tank using pressure measurements obtained during the filling process according to an embodiment of the present invention;

Figure 3b is a flow chart illustrating a method of filling a pressurised tank and of checking the integrity of the pressurised tank using pressure measurements obtained during the filling process according to another embodiment of the present invention;

Figure 4a illustrates a reference pressure-time profile;

Figure 4b illustrates a pressure-time profile representative of an undamaged pressurised tank;

Figure 4c illustrates a pressure-time profile representative of a pressurised tank having a major structural defect;

Figure 4d illustrates a pressure-time profile representative of a pressurised tank having a minor structural defect;

Figure 4e illustrates a pressure-time profile representative of a pressurised tank which is excessively hot during refilling;
Figure 4f illustrates a pressure-time profile representative of a pressurised tank with a valve failure;
Figure 5 is a schematic representation of a pressurised tank having a temperature sensor and an RF-ID tag; and
Figure 6 illustrates another embodiment of a pressurised tank connected to a filling station;
Figures 7a and 7b together show a method of filling the pressurised tank of Figure 6.

## DETAILED DESCRIPTION

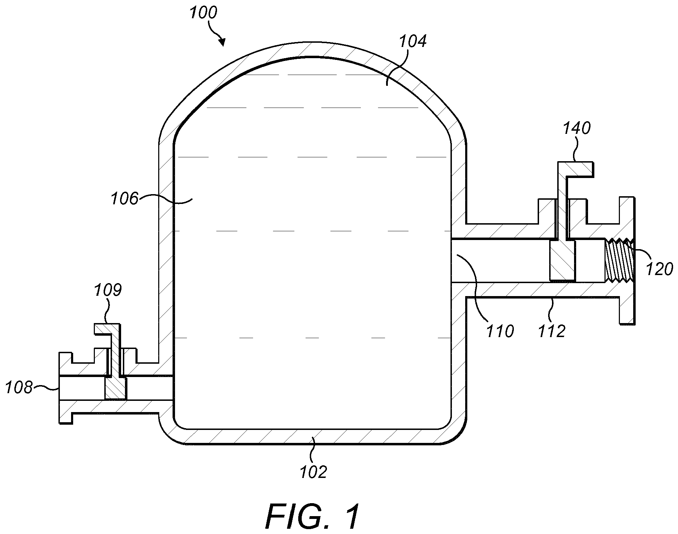

Figure 1 is a schematic representation of a pressurised tank 100 suitable for use with the present invention. The pressurised tank 100 may be used to store fuel to supply a fuel-cell, such as a fuel-cell in a car, motorcycle, bus or coach, van, lorry, a boat or ship, a submarine, an aircraft (fixed wing or rotor craft, manned or unmanned), a spacecraft or some other vehicle. The pressurised tank 100 may be located in any of these types of vehicle, even if the vehicle is not powered by a fuel cell. The pressurised tank 100 is either permanently or removably attached to the vehicle. The pressurised tank 100 is used to store pressurised fluid, either gas or liquid. In the context of storing fuels, the pressurised fluid may be pressurised hydrogen or liquid petroleum gas.

Of particular interest to the applicant are pressurised tanks 100 to supply pressurised hydrogen gas to a fuel cell. Consequently, the following exemplary embodiments relate to pressurised tanks 100 for storing pressurised hydrogen gas in a vehicle that is used to fuel hydrogen fuel cells. In particular, in these examples, the pressurised tanks 100 are for supplying hydrogen fuel to the fuel cells of an aircraft or spacecraft, either manned or unmanned. It is to be remembered that the following embodiments are but examples, and that the present invention has general applicability to the pressurised tanks 100 for storing any pressurised fluid, where that pressurised fluid may be used in any number of applications.

As shown in Figure 1, the pressurised tank 100 has strong walls 102 that define an internal volume 104 in which is stored pressurised hydrogen gas 106. An outlet 108 is provided to allow delivery of hydrogen fuel 106, to a fuel cell (not shown) in this example. The outlet 108 is provided with a valve 109 such that the outlet remains closed when disconnected. In this example, the outlet 108 is provided with a butterfly valve 109 that opens automatically when a connection is made to the outlet 108.

The pressurised tank 100 is filled through an inlet 110 that may be coupled to a filling station 200. The inlet 110 is defined by a pipe 112 having an end provided with a coupling 120. The coupling 120 is, in this example, a quick-release coupling designed according to a standard for receiving a co-operating plug provided on the filling station 200. In alternative embodiments, the coupling 120 is a threaded part designed to receive a co-operating threaded part provided on a filling station 200 (for example, co-operating male and female parts).

The pressurised tank 100 is provided with a valve 140 to allow the inlet 110 to be closed such that hydrogen fuel 106 does not escape from the pressurised tank 100. The valve 140 is opened to allow hydrogen fuel 106 to enter the pressurised tank 100.

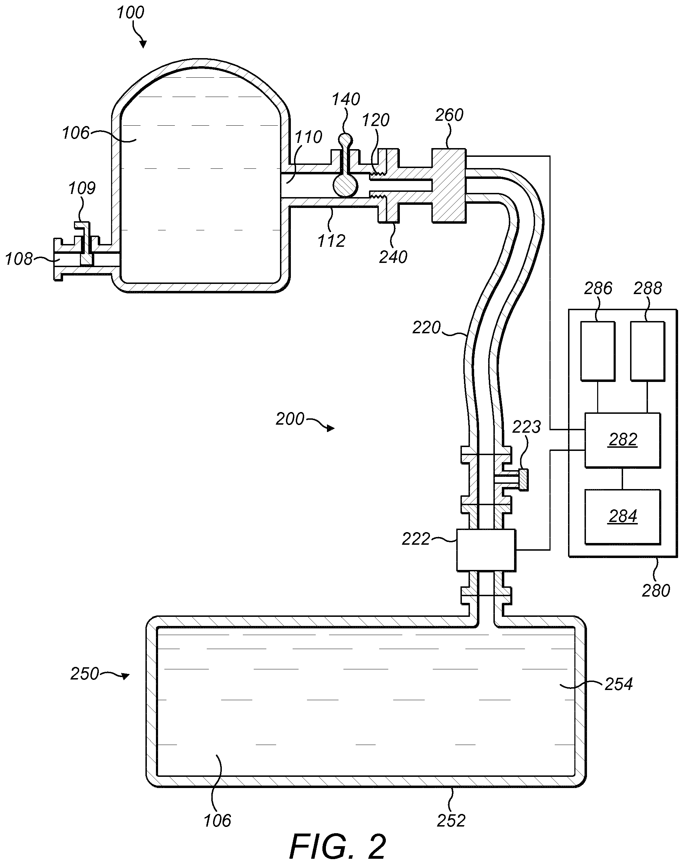

As the hydrogen fuel 106 stored in the pressurised tank 100 is consumed by the vehicle, it is necessary to replenish the hydrogen fuel 106 periodically. Adding hydrogen fuel 106 to the pressurised tank 100 is achieved by connecting the coupling 120 to a filling station 200 like that shown in Figure 2.

The filling station 200 may be mobile (for example, as a tanker lorry or truck) or may be fixed in position (for example, at a gas or service station, a garage, an airport, a transport depot, or home or business premises). Thus, the pressurised tank 100 may be taken to the filling station 200, or the filling station 200 may be taken to the pressurised tank 100.

The filling station 200 has a pressurised tank 250, which is typically a high-capacity pressurised tank capable of storing a large quantity of hydrogen fuel 106 within a large internal volume 254 defined by walls 252. This tank will hereinafter be referred to as the storage tank 250 to allow ease of distinction relative to the pressurised tank 100 provided in the vehicle. The storage tank 250 may be supplied with hydrogen fuel 106 delivered by tankers or may be supplied by a pipeline. The storage tank 250 may be filled and its integrity checked in accordance with the methods disclosed herein.

As shown in Figure 2, the filling station 200 is attached to the pressurised tank 100 via a flexible hose 220. The flexible hose 220 connects to the coupling 120 using a compatible fitting 240 that forms a gas-tight seal. Once connected, the valve 140 is opened to allow hydrogen fuel 106 to enter the pressurised tank 100 (Figure 2 shows the valve 140 as a butterfly valve in its open position, whereas Figure 1 shows the butterfly valve 140 in a closed position). Flow of hydrogen fuel 106 from the filling station 200 to the pressurised tank 100 is regulated using a regulator 222 that is connected to and operated under the control of a control system 280. The flexible hose 220 is also provided with a cut-off valve 223 to allow venting of the hose 220.

The control system 280 may be implemented as a programmed computer 282 with associated memory 284 in which is stored a computer program that, when executed, causes the control system 280 to operate in accordance with the method described herein. A display 286 is also provided for displaying information to a user. An input device 288 such as a keyboard or touch screen is also provided to allow the user to operate the control system 280.

A pressure gauge 260 is also provided at the distal end of the hose 220 so as to be located proximate the coupling 120 of the pressurised tank 100. The pressure gauge 260 monitors the pressure of the hydrogen fuel 106 during the filling process. The pressure gauge 260 is connected to the control system 280 such that the control system 280 receives signals from the pressure gauge 260 and thus can monitor the filling process. The signal received by the control system 280 comprises pressure readings that are stored in the memory 284. The control computer 282 uses the pressure readings to monitor the status of the filling process and to control the filling process via operation of the regulator 222. Information about the status of the filling process may be displayed on the display 286.

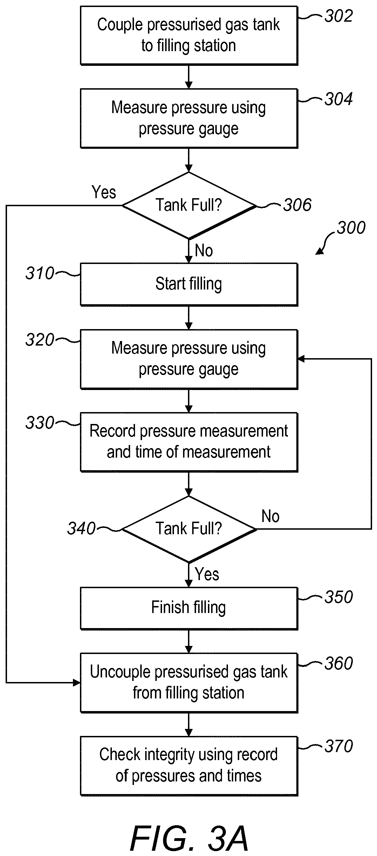

Figure 3a is a flow chart illustrating a method 300 by which the control system 280 monitors and controls the filling process.

First, at 302, an operator couples the hose 220 of the filling station 200 to the coupling 120 of the pressurised tank 100 and opens the valve 140, as described above. Once connected, the control system 280 assumes responsibility for the filling process. In this embodiment, the control system 280 detects coupling automatically, for example the control computer 282 may monitor the pressure readings provided by the pressure gauge 260 and respond to the change in pressure caused by the valve 140 being opened.

At 304, the pressure is measured using pressure gauge 260 and provided to the control system 280 as a pressure reading. At 306, the control computer 282 uses the pressure reading provided by the pressure gauge 260 to determine whether the pressurised tank 100 is full. If the pressurised tank 100 is found to be full already, no filling is necessary and so the flexible hose 220 is uncoupled from the pressurised tank 100, as shown at 360.

If, at step 306, the control computer 282 determines that the pressurised tank 100 is not full, filling commences at step 310. This is achieved by the control computer 282 commanding the regulator 222 to open to allow hydrogen fuel 106 to flow into the pressurised tank 100. The control computer 282 may open the regulator 222 fully or partially to varying degrees to control the flow rate of the hydrogen fuel 106.

While the pressurised tank 100 is being filled, the pressure is measured using the pressure gauge 260, as shown at step 320, and the pressure measurements are provided to the control system 280. At step 330, the pressure measurements received by the control system 280 are recorded in the memory 284, along with a time of each measurement. The time recorded may be an absolute time of may be the amount of time that has elapsed since filling commenced at step 310.

Steps 320 and 330 repeat while filling continues so that regular samples of the pressure are recorded. That is, as shown at step 340, the control computer 282 uses the pressure readings provided by the pressure gauge 260 to determine whether the pressurised tank 100 is full. For example, the control computer 282 may compare the latest pressure reading with a reference pressure that is indicative of the pressurised tank 100 being full. While the pressurised tank 100 is not determined as being full, the method continues to loop through steps 320 to 340 such that pressure data continue to be collected.

When the control computer 282 determines that the pressurised tank 100 is full, the method exits the loop and instead continues to step 350 where filling is finished. This sees the control computer 282 command the regulator 222 to close. Then, at step 360, the operator may close valve 140, vent the pressurised gas remaining in the hose 220 using the cut-off valve 223, and uncouple the pressurised tank 100 from the filling station 200. Finally, at step 370, a check of the integrity of the pressurised tank 100 is performed using the pressure measurements recorded each time step 330 was executed. Step 370 will now be described in more detail.

The pressure measurements are used by the control system 204 to provide a pressure-time profile that shows how the pressure varies while the pressurised tank 100 is being filled. The measured pressure-time profile may be used to determine whether or not the pressurised tank 100 filled in the expected manner and, therefore, whether or not there are any issues with the integrity of the pressurised tank 100. This is achieved by the control computer 282 comparing the measured pressure-time profile against a reference pressure-time profile that shows the expected pressure-time profile for the pressurised tank 100. This reference pressure-time profile is stored in memory 284. As will be discussed in more detail below, the reference pressure-time profile may be determined in a number of ways, including historical measurement during filling of an actual pressurised tank 100 or by simulating or modelling the expected performance of the pressurised tank 100.

In this example, the measured pressure-time profile is displayed on the display 286 alongside the reference pressure-time profile so that the operator may visually check the integrity of the pressurised tank 100. In addition, the pressure-time profile may be analysed by the control computer 282 to provide a message such as a "pass" or "fail" message that is also displayed on the display 202 to indicate whether the pressurised tank 100 is safe to use. Thus, the operator is provided with a conclusion (pass or fail) of analysis and also a display of the comparison of the pressure-time profiles to allow the operator to check the conclusion of the control computer 282 and correct it if required. As will be appreciated, either of these two approaches may be used alone. Specifically, the control computer 282 may perform that analysis and provide just a display of the conclusion, or the control computer 282 may just provide a display of the comparison of the pressure-time profiles so that the operator can form the conclusion.

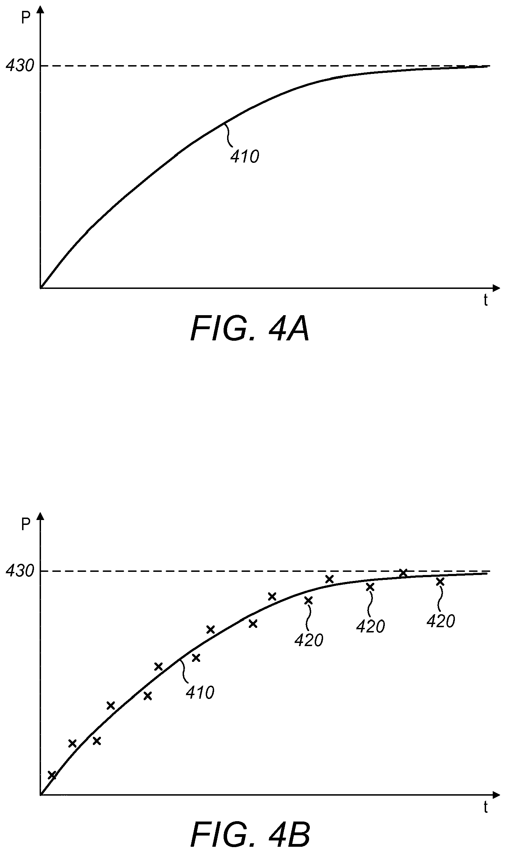

Figure 4a shows an example of graph showing a reference pressure-time profile of a pressurised tank 100. The independent axis of the graph represents time from the filling process starting, the dependent axis of the graph represents the measured fuel pressure and shows a reference curve 410 that represents the expected variation of pressure with time as the pressurised tank 100 is being filled. The dashed horizontal line on the graph is a "tank full line" 430 that indicates the maximum allowed pressure of hydrogen fuel 106 within the pressurised tank 100 and hence indicates when the pressurised tank 100 is full.

Figure 4b shows a pressure-time profile comparison that might be obtained from an undamaged pressurised tank 100.

As described above, the comparison may be displayed to an operator on the display 286 and/or used internally by the control computer 282 when determining the integrity of the pressurised tank 100.

Figure 4b shows the reference pressure-time curve 410, the tank full line 430 and also data points 420 to show the pressure readings obtained as the pressurised tank 100 was being filled. In this example, the data points 420 are shown as crosses although any indicia may be used. The pressurised tank 100 in this example is in good working order with no damage or defects, and an operator can see that the pressure readings indicated by the data points 420 are evenly spaced on and closely about the reference curve 410. The control computer 282 verifies the integrity of the pressurised tank 100 by ensuring that the deviation of the data points 420 from the reference curve 410 is within a pre-defined limit, using any number of well known mathematical techniques. The operator may make a visual confirmation that the expected "pass" conclusion is presented by the control computer 282.

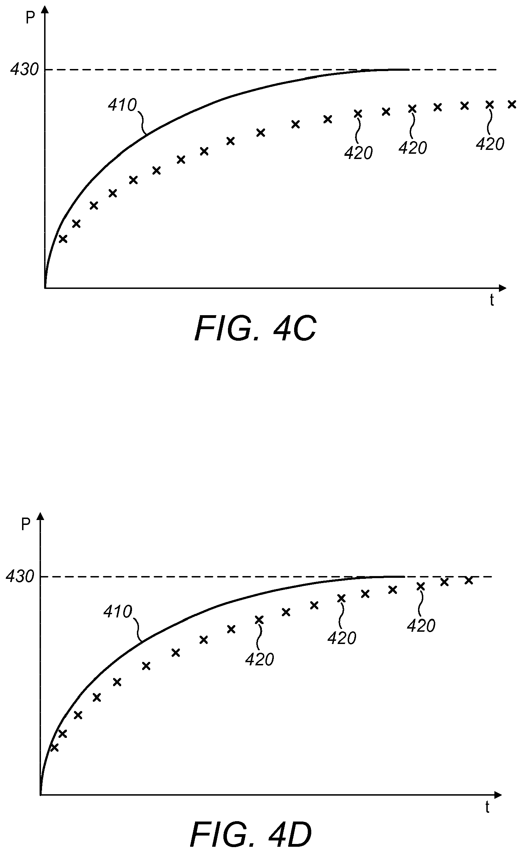

Any defects in the pressurised tank 100 would show as deviations between the data points 420 and the reference curve 410. Figures 4c to 4f show pressure-time profile comparisons that are representative of a number of commonly occurring defects.

Figures 4c and 4d show comparisons for pressurised tanks 100 that have leaks as a result of structural defects. Figure 4c is illustrative of a pressurised tank 100 with a relatively large leak, whereas Figure 4d is illustrative of a pressurised tank 100 with a relatively small leak.

The pressurised tank 100 of Figure 4c has a major structural defect such as a crack in the wall 102, perhaps resulting from an impact. The large defect leads to a relatively-high leak flow rate of hydrogen fuel 106 from the pressurised tank 100: this manifests as the pressure readings represented by data points 420 not rising as quickly as expected. As can be seen from Figure 4c, the data points 420 do not rise quickly enough to follow the reference curve 410. Furthermore, the data points 420 never reach the tank full line 430. This arises because the relatively high leak rate of hydrogen fuel 106 means that the resultant fuel pressure in the pressurised tank 100 rises more slowly than expected and the filling station 200 has an insufficient supply pressure for the measured fuel pressure ever to reach the expected maximum pressure.

The comparison of Figure 4d is indicative of the pressurised tank 100 having a minor structural defect, such as a pinhole in the wall 102 or an imperfectly formed seal in the outlet valve 109. The resultant small leak produces a relatively-low leak rate of hydrogen fuel 106. As can be seen in Figure 4d, this manifests itself in that the data points 420 do not rise quite quickly enough to follow the reference curve 410 although the data points 420 do eventually rise to reach the tank full line 430. This is because the relatively slow leak rate means that the filling station 200 is able to provide a sufficient supply pressure for the pressure in the pressurised tank to reach the maximum pressure 430, but the presence of the leak means that the pressurised tank 100 takes longer to reach this pressure.

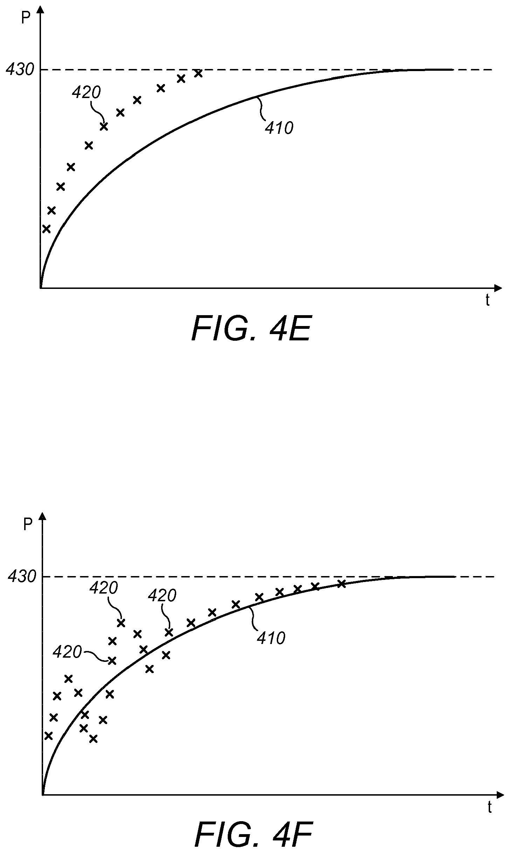

Figure 4e shows a comparison that might be obtained from filling a pressurised tank 100 in a hot climate when the ambient temperature is over the recommended maximum for refilling. If the temperature of the storage tank 250 is too high, over-pressurization during refilling can result. This example shows how the comparison of pressure-time profiles can be used to infer the temperature conditions of the pressurised tank 100 without the need of a temperature sensor.

In Figure 4e, the comparison shows that the data points 420 indicating the pressure readings rise more quickly than the reference curve 410, suggesting therefore that the pressurised tank 100 is filling more quickly than expected. The data points 420 quickly reach the tank full line 430, such that the control system 280 detects that the maximum pressure has been reached and shuts off the hydrogen fuel supply using regulator 222. This prevents the pressurised tank 100 from being over-pressurized which could otherwise lead to failure of the pressurised tank 100. The control system 280 can issue a warning on the display 286 to alert the operator to the fact that the pressurised tank 100 is over temperature.

Figure 4f shows an example of another type of failure that can be detected using the comparison of pressure-time profiles. In Figure 4f, the data points 420 are erratic and show strong oscillations about the reference curve 410 at the beginning of the filling process. Figure 4f is indicative of a failure of the inlet valve 140 of the pressurised tank 100. In this example, valve 140 initially sticks in the closed position after the operator attempts to open the valve 140. For example, the valve 140 may be a butterfly valve 140 and the operator may press a button to open the butterfly valve 140, but the valve 140 may remain stuck in position. The valve 140 may stick in the closed position until the difference in pressure across the valve 140 is high enough to force the butterfly valve 140 to open. However, once the valve 140 opens, the pressure across the valve 140 quickly drops causing the valve 140 to close again. This cycle repeats leading to the observed oscillations in the pressure readings until the pressure in the pressurised tank 100 becomes high enough for the valve 140 finally to stay open. This behaviour is reflected in the positions of the data points 420 relative to the reference curve 410.

The above pressure-time profiles shown in Figures 4c to 4f illustrate how a number of common problems that result from failure/damage of the pressurised tank 100, including its components like the valve 140, may be diagnosed. The person skilled in the art will appreciate that these are merely examples of common problems that can be diagnosed by the method described above and will appreciate that many other conditions may also be diagnosed.

As described above, the control computer 482 compares the measured pressure-time profile against the reference pressure-time profile and determines any deviations. The deviation may be quantified, for example, using a root mean square deviation or some other well known statistical technique. The control computer 482 compares the deviation against a safety threshold to indicate when the pressurised tank 100 is unsafe to use.

In the above embodiment, a check is performed once the filling operation is complete. Then, if the pressurised tank 100 is deemed unsafe for use, the control computer 282 issues a warning to the operator on the display screen 286. Optionally, the warning may be a notice advising the user to inspect or repair the pressurised tank 100. If the damage appears quite severe, the warning might be a notice to stop using the pressurised tank 100 immediately. The severity of the damage to the pressurised tank 100 may be determined by the amount of deviation of the data points 420 from the reference curve 410. For example, a pair of thresholds may be used: a lower threshold to trigger a warning to the operator to perform a visual inspection of the pressurised tank 100, and a higher threshold to prevent use of the pressurised tank 100.

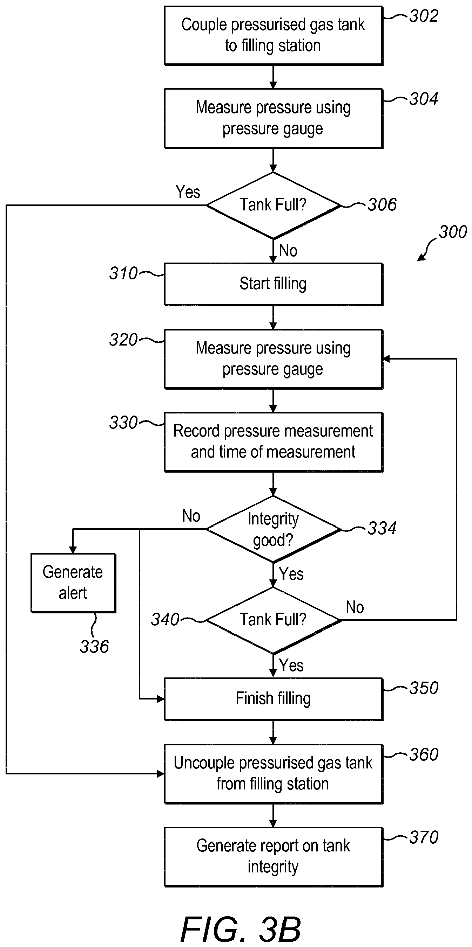

In the embodiment of Figure 3a, the analysis is performed once filling is complete. However, in alternative embodiments of the present inventions the analysis may be performed during the filling operation so as to provide safer operation of the pressurised tank 100. An example of such an embodiment is shown in Figure 3b.

A brief comparison of Figures 3a and 3b shows that the two embodiments share many method steps, and these common method steps are provided with the same reference numerals. To avoid undue repetition, the following description focuses on the different method steps employed in the embodiment of Figure 3b.

Steps 302 to 310 are the same as per Figure 3a. Accordingly, the method proceeds to the start filling step 310 in the same manner as was previously described. Once filling begins, a modified filling procedure is followed. A loop is performed similar to that of Figure 3a in which pressure measurements are taken at 320, and then stored along with the associated time at 330. Hence, the same recordal is made that allows a pressure-time profile to be generated. The same check as to whether the pressurised tank 100 is full is made at step 340, and this determines whether another loop is performed or whether the method proceeds to the finish filling step 350.

However, the loop includes a further check, as shown at step 334. The position of this check within the loop may be varied from that shown in Figure 3b. In this step 334, the integrity of the pressurised tank 100 is checked. That is, a check is made to determine whether there is any evidence to suggest that the integrity of the pressurised tank 100 is not sound. This may be determined using the analysis described above, i.e. through a comparison of the measured pressure-time profile to the reference pressure-time profile. As will be appreciated, at the initial stages of the filling process, very few data points 420 will have been recorded. At these early stages, the integrity of the pressurised tank 100 may be assumed to be sound. Whenever the integrity of the pressurised tank 100 is found to be good at step 334, the method continues through the current loop, by continuing to step 340.

However, as filling continues, more and more data points 420 will become available for comparison to the reference curve 410 and so the determination of the integrity of the tank at step 334 may indicate that the integrity is not sound. If this happens, the method exits the loop and continues in parallel to steps 336 and 350. At step 336, an alert is generated to draw the attention of the operator to the unsafe condition. Step 350 is the finish filling step previously described with respect to Figure 3a. That is, the control computer 282 commands the regulator 222 to close immediately. The control system 204 may also vent the pressurised tank 100 to prevent further damage or to reduce the danger posed by the damaged tank 100. Then, at step 360, the operator may close valve 140 and uncouple the pressurised tank 100 from the filling station 200. Finally, at step 370, a report on the integrity of the pressurised tank 100 is generated based on the previous analysis.

As mentioned previously, the control computer 280 may have a two-level determination of the integrity of the pressurised tank 100. That is, small defects may be identified that may be deemed as allowing the continued filling of the pressurised tank 100 to be performed safely. However, detecting a large defect will trigger the method to exit at step 334 such that filling is stopped with immediate effect. In such a circumstance, step 334 may generate a positive response when a minor defect is detected such that filling is allowed to continue, although step 370 will see a report generated that flags this minor defect. Of course, the method will continue to loop during filling, such that if the defect worsens, it may trigger the method to exit following a determination that the integrity of the pressurised tank 100 is no longer sound.

As described briefly above, a reference pressure-time profile for a given pressurised tank 100 may be determined in a number of ways. In some instances, the reference profile may be a historical measurement for the given pressurised tank 100. For example, the measurement may be taken at, or shortly after, manufacture or before the pressurised tank 100 was placed in service or at that or another time when the pressurised tank 100 was known or assumed to be free from damage and defects.

A reference pressure-time profile need not be obtained for every single pressurised tank 100 that is manufactured. Instead, the reference pressure-time profile may be measured for a representative pressurised tank 100 and assumed to be valid for other similar tanks 100. Alternatively, multiple measurements may be averaged to provide the reference pressure-time profile.

In some embodiments, the measured pressure-time profiles are stored each time the pressurised tank 100 is filled to form a historical record of the measured pressure-time profiles. These may be stored every time the pressurised tank 100 is filled or they may be stored for only a certain number of fills, for example, the last ten fills. This allows the historical record of the measured pressure-time profiles to be compared statistically. This makes it possible to detect changes in the refilling characteristics, and to detect the evolution of tank defects, for instance, the development of cracks or corrosion. A number of standard statistical parameters can be used for this comparison, for example, looking at the standard deviation and variance of the historical data.

The reference pressure-time profile need not be measured, but may instead be determined through modelling or simulating the expected performance of a pressurised tank 100. The following example illustrates such a method where a pressurised tank 100 is filled using a positive displacement-type compressor such as a diaphragm compressor. In this example, the reference pressure-time profile may be calculated according to the following equation:

$$P^{\frac{1}{n}} = V_c \left( 1 - e^{-t_c} \right) + e^{-t_c} \qquad \text{eq. (1)}$$

with:

$$t = \frac{t}{t_{ch}}, \qquad \text{eq. (2)}$$

and

$$t_{ch} = \frac{60}{N} \cdot \frac{V_t}{V_{c,3}} \cdot \frac{T_{suc}}{T_{t,0}} \cdot \left( \frac{P_{t,0}}{P_{suc}} \right)^{\frac{n-1}{n}}, \qquad \text{eq. (3)}$$

$$V_c = \frac{V_{c,1}}{V_{c,3}} \left( \frac{P_{suc}}{P_{t,0}} \right)^{\frac{1}{n}} \qquad \text{eq.(4)}$$

P is the pressure, t is time, N is the compressor crank rotations per minute, $V_t$ is the volume of the pressurised tank 100, $P_t$ and $T_t$ are the pressure and temperature inside the pressurised tank 100 respectively, $P_{suc}$ and $T_{suc}$ are the pressure and temperature at the compressor inlet, n is the polytropic coefficient obtained from the compressor efficiency and gas heat capacities, and $V_{c,1}$ and $V_{c,3}$ are compressor parameters relating to the displacement volume that are obtained experimentally.

In certain embodiments, the historical record of the measured pressure-time profiles and the reference pressure-time profile are stored so that they are available for use on each occasion the pressurised tank 100 is filled. The reference pressure-time profile may be stored in the memory 284 of the filling station 200. However, as the pressurised tank 100 may not always be filled at the same filling station 200, the reference pressure-time profile 410 may be stored advantageously with the pressurised tank 100.

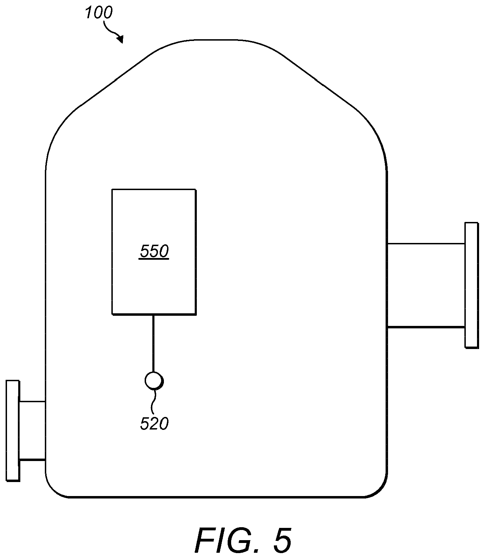

Figure 5 shows an illustration of a pressurised tank 100 according to an embodiment of the present invention that is provided with a memory device 550 for storing a reference pressure-time profile and, optionally, historical measured pressure-time profiles. In this example, the memory device is an RF-ID tag 550 attached to the pressurised tank 100. The control system 280 may be provided with an RF-ID tag reader (not shown in Figure 5) that can read the pressure-time profile and, optionally, the historical measured pressure-time profiles from the RF-ID tag 550. The RF-ID tag 550 may be powered by energy transmitted from the RD-ID tag reader.

Once a filling process is completed, the measured pressure-time profile from the current fill may be written back to the RF-ID tag 550, either appending the existing profiles held on the RF-ID tag 550 or overwriting the oldest profile (e.g. if no more space is available on the RF-ID tag 550, or if a first-in first-out FIFO buffering method is being employed).

The RF-ID tag 550 may also be used to store other information about the pressurised tank 100, such as the serial number of the tank 100 and/or the purity of the hydrogen fuel 106 stored in the pressurised tank 100 during the previous fill.

The use of an RF-ID tag 550 has the advantage that it may be easily read by the control system's RF-ID tag reader merely by placing the tag 550 and reader in close proximity and without having to attach additional cables to the pressurised tank 100. Other forms of wireless communication may be used, such as near-field communication devices and/or NFC protocols. Moreover, the reference pressure-time profile and the historical measured pressure-time profiles could equally well be stored on other memory devices attached to the pressurised tank 100 such as a hard disk or solid state device.

In some embodiments, the temperature of the pressurised tank 100 during the filling process is measured by a temperature sensor 520, for example by a temperature sensor 520 provided on an outer surface of the tank wall 102. The temperature sensor 520 is communicatively coupled to the RF-ID tag 550 so that real-time information about the temperature of the pressurised tank 100 may be transmitted to the control system 280 of the filling station 200. The RF-ID tag 550 may also provide electrical power to the temperature sensor 520. In some embodiments, temperature information collected in this way is used to improve the accuracy of the simulated reference pressure-time profile calculated according to equations (1) to (4) above.

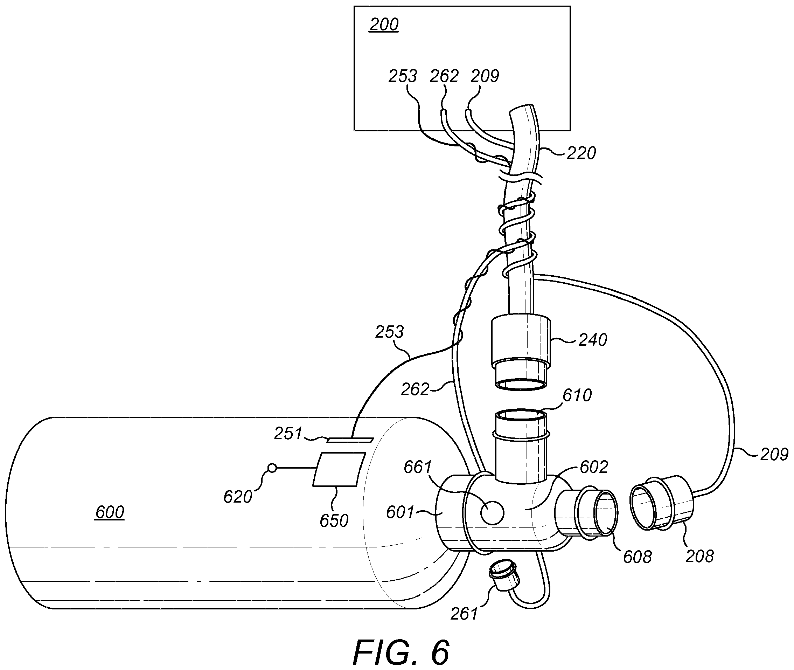

Figure 6 illustrates a further embodiment of the present invention where a pressurised tank 600 is connected to a filling station 200. The pressurised tank 600 has a threaded coupling 601 to which a two-stage pressure regulator 602 is attached. In this embodiment, the pressure regulator 602 is left attached to the pressurised tank 600 during normal operation, although may be removed for maintenance or renewal. The correct operation of the pressure regulator 602 is tested at the same time as the integrity of the rest of the pressurised tank 600.

In this embodiment, the pressure regulator 602 is used both for the ingress and egress of hydrogen fuel 106. That is, the pressurised tank 600 is refuelled through an inlet 610 of the regulator 602 via a connector 240 provided on the distal end of the hose 220. The connector 240 is a quick-connect coupling for connection with a complementary fitting of the inlet 610. Hydrogen fuel 106 is then discharged to the fuel cell at low pressure through a valved low-pressure outlet 608 of the regulator 602.

The pressure regulator 602 includes a high-pressure transducer (not shown) that is used to measure the pressure in the pressurised tank 600. The high-pressure transducer is wired to a connector 661 provided on the regulator 602. This allows a wired connection to the filling station 200 to be made via a co-operating connector 261, thereby forming a high-pressure measurement line 262.

A low-pressure measurement line 209 to the filling station 200 is also formed with a quick-connect coupling 208 that is fitted to the low-pressure outlet 608. This coupling 208 terminates the low-pressure outlet 608 with a pressure transducer that provides low-pressure measurements to the filling station 200. The purpose of the low-pressure measurements 665 is to monitor the pressure at the low-pressure outlet 608 to verify the pressure is within the range required by the vehicle.

The outer surface of the pressurised tank 600 is provided with an RF-ID tag 650 that is connected to a temperature sensor 620 so as to supply power to the temperature sensor 620. This arrangement is the same as that described with respect to Figure 5. The filling station 200 is provided with an RF-ID line 253 that terminates with an RF-ID reader 251, which is placed within close to the RF-ID tag 650, for example within 50 mm, such that a wireless connection is made between the tag 650 and reader 251. This enables the filling station 200 to read the information stored on the RF-ID tag 650. The RF-ID reader 251 supplies power to the RF-ID tag 650 that is used to power the temperature sensor 620.

The high-pressure measurement line 262, the low-pressure measurement line 262 and the RF-ID line 253 are connected to the control system 280 of the filling station 200.

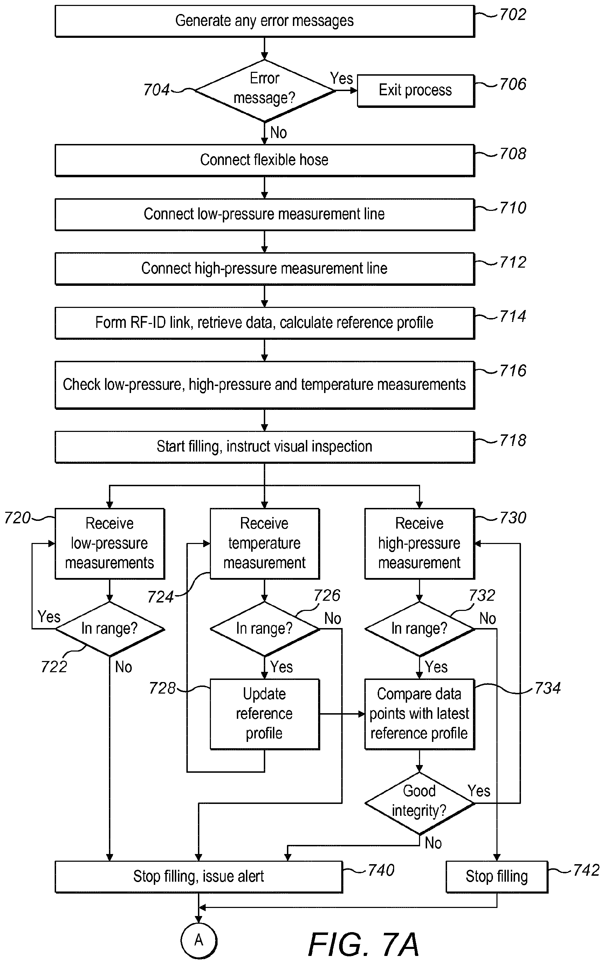

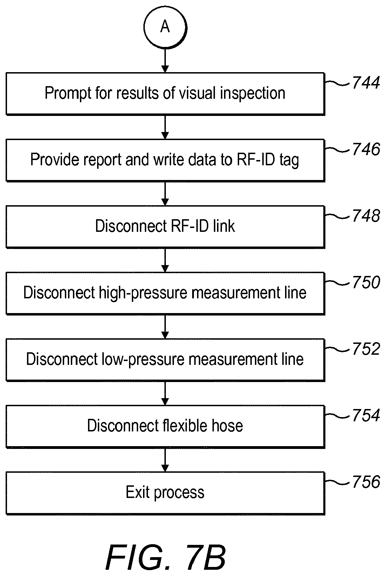

Figures 7a and 7b shows a method of filling the pressurised tank 600 of Figure 6.

At 704, an operator checks the display 286 of the filling station 200 to ensure that there are no error messages showing on the display 286 generated previously at step 702, and hence that the filling station 200 is ready for operation. If the filling station 200 is not ready for operation, the process exits at 706. Otherwise the process continues.

The pressure regulator 602 is exposed by either extracting the pressurised tank 600 from the vehicle or by accessing a refill port on the body of the vehicle. At 708, the operator connects the flexible hose 220 to the inlet 610 via the quick-connect coupling. The action of forming the quick-connect coupling between the inlet 610 and the hose 220 opens a pair of self-sealing valves provided in the complementary halves of the quick-connect coupling.

With the hose 220 connected to the regulator's inlet 610, the operator next connects the low-pressure measurement line 209 to the regulator 602 at step 710. That is, the operator joins the quick-connect coupling 208 to the low-pressure outlet 608 of the regulator 602. With the connection made, the control system 280 begins to receive low-pressure measurements through the low-pressure measurement line 209.

With the hose 220 connected to the regulator's inlet 610 and with the low-pressure measurement line 209 connected to the low-pressure outlet 608, the operator next connects the high-pressure measurement line 262 from the filling station 200 to the regulator 602 at step 712. That is the operator joins the connectors 261 and 661, thereby forming a link between the high-pressure transducer and the control system 280. With the link made, the control system 280 begins to receive high-pressure measurements through the high-pressure measurement line 262.

At step 714, the operator places the RF-ID reader 251 within 50 mm of the RF-ID tag 650 to establish the wireless connection between the tag 650 and the reader 251. Upon forming the wireless connection, the control system 280 of the filling station 200 reads the information stored on the RF-ID tag 650. The control system 280 accesses data about the pressurised tank 600 and the hydrogen fuel 106 that is stored in or has previously been stored in the pressurised tank 600. This data includes: the model and the serial number of the pressurised tank 600 (or any other unique identifier of the pressurised tank 600); the purity of the hydrogen fuel 106 stored in the pressurised tank 600 as measured by the filling station 200 on the previous occasion the pressurised tank 600 was filled; and reference pressure-time profiles from up to the ten previous occasions when the pressurised tank 600 was filled. In addition, the filling station 200 accesses a real-time reading from the temperature sensor 520 by accessing a memory address of the RF-ID tag 550.

With the data retrieved from the RF-ID tag 650, the control computer 282 performs a simulation of the tank filling process, as described above, to produce a reference pressure-time profile. The simulation calculates the reference pressure-time profile of the pressurised tank 600 from equations (1) to (4) using the data pertaining to the pressurised tank 600 retrieved from the RF-ID tag 650 and the temperature readings provided by the temperature sensor 620.

Once the reference pressure-time profile has been calculated, the control system 280 checks the high-pressure and low-pressure measurements at step 716 to ensure they are within expected ranges and also that the temperature reading is within an allowed range. If these checks are passed, the process of filling of the pressurised tank 600 is started automatically, as shown at 718. The control system 280 provides a confirmation that filling has started on the display 286 and also displays an instruction for the operator to perform a visual inspection of the pressurised tank 600. The visual inspection usually takes less than one minute.

Once filling commences, the control system 280 receives measurements, as follows.

The control system 280 receives low-pressure measurements from the regulator outlet 608 along the low-pressure measurement line 209, as indicated at 720. The control system 280 monitors these low-pressure measurements arriving along line 209 to ensure that they remain within the operating range of the vehicle, as indicated at 722. If the low-pressure measurements go out of the operating range, the filling process is stopped at step 740 and an alert is generated to report the reason why filling was terminated early.

Temperature measurements are also received from the temperature sensor 620, as shown at step 724 and are checked at step 726 to ensure that they remain within the allowed range. If they are found to be outside the allowed range, the filling process is stopped at step 740 and an alert is generated to report the reason why filling was terminated early. If the temperature reading is in range, the method proceeds to step 728. The new temperature measurement is used in a new simulation of the tank filling process to produce an updated reference pressure-time profile. This step may be omitted if the temperature measurement has not changed since the previous measurement. In this way, the reference pressure-time profile constantly updates as new temperature readings are received from the temperature sensor 620.

During the filling process, the high-pressure transducer is used to measure the pressure in the pressurised tank 600 and these measurements are received by the control system 280 via the high-pressure measurements line 262, as shown at 730. At step 732, the high-pressure measurement is checked to see whether it has reached the tank-full value. If so, the pressurised tank is assumed to be full and filling stops at step 742. If the pressurised tank 200 is not full, the method continues to step 734. Optionally, a further check may be made. Specifically, the control system 280 compares the high-pressure measurement to the supply pressure of the filling station 200 to verify that there are no leaks along the flexible hose 220. If problems are found, the filling process may be stopped via step 740.

At step 734, the latest reference pressure-time profile 410 from the simulation is compared with the actual tank data measured using the high-pressure transducer, as described previously. This process is repeated each time a new high-pressure measurement is received at step 730. Any deviation between the curve 410 representing the reference pressure-time profile and the data points 420 representing the measured pressure inside the pressurised tank 100 is compared against a safety threshold to determine whether the pressurised tank 600 is safe for use. If this comparison indicates that the pressurised tank 600 is not safe, the refilling process is stopped early at step 740 and a "non-compliance" message is displayed indicating that the pressurised tank 600 is not safe for operation. If the tank is deemed safe, filling continues.

In addition, the high-pressure measurements and the temperature measurements of the pressurised tank 600 can be compared statistically with the historical reference pressure-time profiles stored on the RF-ID tag 650 (for example, using standard deviation).

Once the filling station 200 stops filling, either because the pressurised tank 200 is full as shown at step 742 or prematurely due to a fault as shown at step 740, the method continues to step 744 shown in Figure 7b. At step 744, the control system 280 prompts the operator to indicate whether they have found any visible defect on the surface of the pressurised tank 600 during the visual inspection. If the operator answers "yes", the control system 280 records that the pressurised tank is "unsafe" and indicates surface defects as the diagnostic.

Next, at step 746, the measured pressure and temperature characteristics of the pressurised tank 600 are recorded by the control system 280, and the results of the filling operation are presented to the operator on the screen 286 of the filling station 200, telling the operator whether or not the pressurised tank 600 is safe to use. In the case that the filling station 200 determines that the pressurised tank 600 is not safe for use, the screen 286 displays full diagnostic information, which may include information about the pressure and temperatures measurements recorded during the current filling operation, historical pressure and temperature measurements read from the RF-ID tag 650 and information obtained from the analysis performed by the filling station 200 to determine whether or not the pressurised tank 600 is safe to use.

The results are also written to the RF-ID tag 650. Ten sets of measurements are stored using a first-in first-out method. The stored results may be used in the future by the filling station 200 to determine whether it is safe to proceed with filling. The results may also be used to prevent an unsafe pressurised tank 600 from being used in the vehicle.

The control system 280 also directs the operator to remove all of the connections. That is, the operator removes the RF-ID reader 251 from the pressurised tank 600 at step 748, uncouples the high-pressure connectors 661 and 261 at step 750, disconnects the coupling 208 from the low-pressure outlet 608 at step 752 (with the valve provided in the low pressure outlet 608 closing automatically to prevent gas escaping though this outlet), and finally vents any remaining gas in the hose 220 and then uncouples the hose 220 from the inlet 610 of the regulator 602 at step 754. It will be appreciated that the order of connecting and disconnecting the connectors is not critical and either operation can be performed in any order. Once the filling station 200 is fully disconnected from the pressurised tank 600, the filling operation is complete as indicated at step 756.

The person skilled in the art will appreciate that variations may be made to the above described embodiments without departing from the scope of the invention defined by the appended claims.

**Claims**

1. A method for checking the integrity of a pressurised fuel tank (100; 600) using pressure measurements obtained during a filling process where the pressurised fuel tank is filled with fuel and wherein the fuel is a fluid, the method comprising:

   obtaining pressure measurements indicating a series of pressures inside the pressurised fuel tank at different times during the filling process as the pressurised fuel tank is being filled with fuel thereby describing a measured pressure profile of the filling process;
   comparing the measured pressure profile (420) against a reference pressure profile (410) that indicates an expected series of pressures inside the pressurised fuel tank at different times during a filling process where the pressurised fuel tank is filled with fuel, wherein the fuel is fluid, to determine whether the measured and reference pressure profiles correspond; and
   using the comparison to provide an indication of the integrity of the pressurised fuel tank.

2. The method of claim 1, comprising comparing the measured pressure profile against the reference pressure profile to determine whether the measured and reference pressure profiles correspond and, (a) confirming the integrity of the pressurised fuel tank if the measured and reference pressure profiles are found to correspond, or (b) reporting a problem with the integrity of the pressurised fuel tank if the measured and reference pressure profiles are found not to correspond.

3. The method of claim 2, comprising comparing the measured pressure profile against the reference pressure profile to determine by how much they differ and reporting a problem with the integrity of the pressurised fuel tank if the measured and reference pressure profiles are found to differ by more than a predetermined threshold.

4. The method of claim 2 or claim 3, comprising comparing the measured pressure profile against the reference pressure profile to characterise how they differ and reporting an indication of the type of problem with the integrity of the pressurised fuel tank based on the characteristic of the difference between the measured and reference pressure profiles.

**5.** The method of any preceding claim, wherein the reference pressure profile is a pressure profile measured previously.

**6.** The method of claim 5, wherein the reference pressure profile is derived from one or more measured pressure profiles measured during a previous filling process where the pressurised fuel tank is filled with fuel wherein the fuel is a fluid, optionally from the measured pressure profiles measured during the ten previous filling processes.

**7.** The method of any of claims 1 to 4, wherein the reference pressure profile is calculated, for example using a computer simulation.

**8.** The method of claim 7, wherein the reference pressure profile is calculated during the filling process using a measurement of the temperature of the pressurised fuel vessel and, optionally, wherein the method further comprises:

updating the reference pressure profile when a new measurement of the temperature of the pressurised fuel tank is received,
comparing the measured pressure profile against the updated reference pressure profile to determine whether the measured and reference pressure profiles correspond; and
using the comparison to provide an indication of the integrity of the pressurised fuel tank.

**9.** The method of any preceding claim, further comprising:

filling the pressurised tank fuel with a fuel;
measuring pressures inside the pressurised fuel tank thereby obtaining the pressure measurements; and
controlling the filling process based upon the indication of the integrity of the pressurised fuel tank.

**10.** The method of any preceding claim, further comprising retrieving information pertaining to the pressurised fuel tank from a memory device provided on the pressurised fuel tank and, optionally, storing the indication of the integrity of the pressurised fuel tank on the memory device of the pressurised fuel tank.

**11.** The method of any preceding claim, further comprising storing information pertaining to the pressurised fuel tank from a memory device (550; 650) provided on the pressurised fuel tank, the information corresponding to an indication of the integrity of the pressurised fuel tank and/or the measured pressure profile.

**12.** The method of any preceding claim, further comprising monitoring the pressure at an outlet (108; 608) of the pressurised fuel tank during the filling process.

**13.** A computer program which, when executed by a computer processor, causes the computer processor to carry out a method according to any one of claims 1 to 12.

**14.** A computer readable memory storage device having stored thereon a computer program according to claim 13.

**15.** A computer system (280) programmed to implement the method of any of claim 1 to 12.

**16.** A filling station (200) for filling a pressurised fuel tank (100) with a fuel (108), comprising:

the computer system of claim 15;
a storage tank (250) for containing fuel (106) to be delivered;
a connection (220) with an outlet configured to connect the storage tank to a pressurised fuel tank to be filled via the outlet of the connection; and
a regulator (222; 602) configured to regulate flow of the fuel from the storage tank to the outlet;
and wherein
the computer system is programmed to operate the regulator to allow the pressurised fuel tank to be filled with the fuel and, optionally, to control the regulator based upon the indication of the integrity of the pressurised fuel tank.

**17.** A combination of a pressurised fuel tank (100; 600) and the filling station (200) of claim 16, wherein:

the pressurised fuel tank comprises an inlet (110; 610) for connection to the outlet of the connection, and a pressure sensor, (260) operable to make the pressure measurements;

and wherein the filling station further comprises a connection for connecting the computer system to the pressure sensor so that the computer system may receive the pressure measurements provided by the pressure sensor.

18. The combination of claim 17, wherein the pressurised fuel tank further comprises an RF-ID device having a memory and a transmitter, the memory containing data defining the reference pressure profile and the transmitter being configured to transmit the data; and the filling station further comprises an RF receiver configured to receive the data and to provide the data to the computer system.

19. The combination of claim 18, wherein the data stored in the memory comprises the measured pressure profiles from a series of previous filling processes, optionally the previous ten filling processes.

20. The combination of claim 18 or claim 19, wherein the pressurised fuel tank further comprises a temperature sensor configured to take temperature measurements of the pressurised fuel tank, and wherein, optionally, the RF-ID device is configured to transmit the temperature measurements and wherein the RF receiver is configured to receive the temperature measurements and to provide the temperature measurements to the computer system.

21. A pressurised fuel tank (100; 600) configured to be connected to a filling station of claim 16 and comprising:

a vessel for storing a quantity of fuel (106) under pressure, wherein the fuel is a fluid;
an inlet (110; 610) configured to allow the vessel to be filled; and **characterised by**:

memory means (550; 650) having stored therein data defining a reference pressure profile (420) indicating an expected series of pressure values inside the pressurised fuel tank at different times during a filling process when the pressurised fuel tank is being filled with a fuel, wherein the fuel is a fluid; and
a transmitter (550; 650) configured to transmit the data defining the reference pressure profile; and optionally, further comprising at least one of:

a temperature sensor (520; 620) configured to obtain temperature measurements of the pressurised fuel tank and wherein the transmitter is configured to transmit the temperature measurements; and
a pressure sensor (260) configured to obtain pressure measurements of the pressurised fuel tank and wherein the transmitter is configured to transmit the pressure measurements.

22. A vehicle, optionally an air vehicle, comprising the pressurised fuel tank of claim 21.

**Patentansprüche**

1. Verfahren zum Überprüfen der Integrität eines unter Druck stehenden Treibstofftanks (100; 600) unter Verwendung von Druckmessergebnissen, die während eines Füllvorgangs erhalten werden, bei dem der unter Druck stehende Treibstofftank mit Treibstoff gefüllt wird, wobei es sich bei dem Treibstoff um ein Fluid handelt und wobei das Verfahren umfasst:

Erhalten von Druckmessergebnissen, die eine Reihe von Drücken im Inneren des unter Druck stehenden Treibstofftanks zu unterschiedlichen Zeitpunkten während des Füllvorgangs angeben, wenn der unter Druck stehende Treibstofftank mit Treibstoff gefüllt wird, und die dadurch ein gemessenes Druckprofil des Füllvorgangs wiedergeben;
Vergleichen des gemessenen Druckprofils (420) mit einem Referenzdruckprofil (410), das eine Reihe von erwarteten Drücken im Inneren des unter Druck stehenden Treibstofftanks zu unterschiedlichen Zeitpunkten während des Füllvorgangs angibt,
wenn der unter Druck stehende Treibstofftank mit Treibstoff gefüllt wird, wobei es sich bei dem Treibstoff um ein Fluid handelt,
um zu ermitteln, ob das gemessene Druckprofil dem Referenzdruckprofil entspricht; und
Verwenden des Vergleichs um einen Hinweis auf die Integrität des unter Druck stehenden Treibstofftanks zu liefern.

2. Verfahren nach Anspruch 1, das umfasst, das gemessene Druckprofil mit dem Referenzdruckprofil zu vergleichen, um zu bestimmen, ob das gemessene Druckprofil dem Referenzdruckprofil entspricht, und (a) die Integrität des unter Druck stehenden Treibstofftanks zu bestätigen, wenn festgestellt wird, dass das gemessene Druckprofil dem Referenzdruckprofil entspricht, oder (b) ein Problem bezüglich der Integrität des unter Druck stehenden Treibstofftanks zu melden, wenn festgestellt wird, dass das gemessene Druckprofil nicht dem Referenzdruckprofil entspricht.

3. Verfahren nach Anspruch 2, das umfasst, das gemessene Druckprofil mit dem Referenzdruckprofil zu vergleichen, um zu bestimmen, inwieweit sich diese unterscheiden, und ein Problem bezüglich der Integrität des unter Druck stehenden Treibstofftanks zu melden, wenn festgestellt wird, dass sich das gemessene Druckprofil und das Referenzdruckprofil um mehr als einen vorgegebenen Schwellwert unterscheiden.

4. Verfahren nach Anspruch 2 oder Anspruch 3, das umfasst, das gemessene Druckprofil mit dem Referenzdruckprofil zu vergleichen, um zu charakterisieren, wie sich diese unterscheiden, und einen Hinweis auf die Art des Problems bezüglich der Integrität des unter Druck stehenden Treibstofftanks auf Basis der Charakteristik des Unterschieds zwischen dem gemessenen Druckprofil und dem Referenzdruckprofil zu liefern.

5. Verfahren nach einem der vorhergehenden Ansprüche, wobei es sich bei dem Referenzdruckprofil um ein zuvor gemessenes Druckprofil handelt.

6. Verfahren nach Anspruch 5, wobei das Referenzdruckprofil von einem oder mehreren gemessenen Druckprofilen abgeleitet ist, die während eines vorhergehenden Füllvorgangs gemessen wurden, bei dem der unter Druck stehende Treibstofftank mit Treibstoff gefüllt wurde, wobei es sich bei dem Treibstoff um ein Fluid handelt, und optional von den gemessenen Druckprofilen abgeleitet ist, die bei den zehn vorhergehenden Füllvorgängen gemessen wurden.

7. Verfahren nach einem der Ansprüche 1 bis 4, wobei das Referenzdruckprofil beispielsweise unter Verwendung einer Computersimulation berechnet wird.

8. Verfahren nach Anspruch 7, wobei das Referenzdruckprofil während des Füllvorgangs unter Verwendung einer Messung der Temperatur des unter Druck stehenden Treibstoffbehälters berechnet wird, wobei das Verfahren optional ferner umfasst:

   Aktualisieren des Referenzdruckprofils, wenn eine neue Messung der Temperatur des unter Druck stehenden Treibstofftanks erhalten wird;
   Vergleichen des gemessenen Druckprofils mit dem aktualisierten Referenzdruckprofil, um zu bestimmen, ob das gemessene Druckprofil dem Referenzdruckprofil entspricht; und
   Verwenden des Vergleichs, um einen Hinweis auf die Integrität des unter Druck stehenden Treibstofftanks zu liefern.

9. Verfahren nach einem der vorhergehenden Ansprüche, das ferner umfasst:

   Füllen des unter Druck stehenden Treibstofftanks mit Treibstoff;
   Messen von Drücken im Inneren des Treibstofftanks, wodurch die Druckmessergebnisse erhalten werden; und
   Steuern des Füllvorgangs auf Basis des Hinweises auf die Integrität des unter Druck stehenden Treibstofftanks.

10. Verfahren nach einem der vorhergehenden Ansprüche, das ferner umfasst, Informationen, die zu dem unter Druck stehenden Treibstofftank gehören, aus einer Speichereinrichtung abzurufen, die an dem unter Druck stehenden Treibstofftank angebracht ist, und optional den Hinweis auf die Integrität des unter Druck stehenden Treibstofftanks in der Speichereinrichtung des unter Druck stehenden Treibstofftanks zu speichern.

11. Verfahren nach einem der vorhergehenden Ansprüche, das ferner umfasst, Informationen, die zu dem unter Druck stehenden Treibstofftank gehören, aus einer Speichereinrichtung (550; 650) zu speichern, die an dem unter Druck stehenden Treibstofftank angebracht ist, wobei die Informationen einem Hinweis auf die Integrität eines unter Druck stehenden Treibstofftanks und/oder dem gemessenen Druckprofil entsprechen.

12. Verfahren nach einem der vorhergehenden Ansprüche, das ferner umfasst, den Druck an einem Auslass (108; 608) des unter Druck stehenden Treibstofftanks während des Füllvorgans zu überwachen.

13. Computerprogramm, das bei Ausführung durch einen Computerprozessor den Computerprozessor veranlasst, ein Verfahren nach einem der Ansprüche 1 bis 12 durchzuführen.

14. Computerlesbares Medium, auf dem ein Computerprogramm nach Anspruch 13 gespeichert ist.

**15.** Computersystem (280), das programmiert ist, ein Verfahren nach einem der Ansprüche 1 bis 12 zu implementieren.

**16.** Füllstation (200) zum Befüllen eines unter Druck stehenden Treibstofftanks (100) mit Treibstoff (108), wobei die Füllstation aufweist:

ein Computersystem nach Anspruch 15;
einen Vorratstank (250), der den zu liefernden Treibstoff (106) enthält;
einen Anschluss (220) mit einem Auslass, der zum Verbinden des Vorratstanks über den Auslass des Anschlusses mit einem zu füllenden, unter Druck stehenden Treibstofftank ausgebildet ist; und
einen Regler (222; 602), der zum Regeln des Treibstoffflusses von dem Vorratsstank zu dem Auslass ausgebildet ist;
und wobei:

das Computersystem programmiert ist, den Regler so zu betätigen, dass der unter Druck stehende Treibstofftank mit Treibstoff gefüllt werden kann, und den Regler optional auf Basis des Hinweises auf die Integrität des unter Druck stehenden Treibstofftanks zu steuern.

**17.** Kombination aus einem unter Druck stehenden Treibstofftank (100; 600) und einer Füllstation (200) nach Anspruch 16, wobei:

der unter Druck stehende Treibstofftank einen Einlass (110; 610) zum Verbinden mit dem Auslass des Anschlusses und einen Drucksensor (260) aufweist, der zum Durchführen von Druckmessungen betrieben werden kann;
wobei die Füllstation ferner einen Anschluss zum Verbinden des Computersystems mit dem Drucksensor aufweist, sodass das Computersystem die von dem Drucksensor gelieferten Druckmessergebnisse erhalten kann.

**18.** Kombination nach Anspruch 17, wobei der unter Druck stehende Treibstofftank ferner eine RFID-Vorrichtung aufweist, die einen Speicher und einen Transmitter umfasst, wobei der Speicher Daten enthält, die das Referenzprofil definieren, und wobei der Transmitter zum Übertragen von Daten ausgebildet ist; und die Füllstation ferner einen RF-Empfänger aufweist, der zum Empfangen der Daten und zum Liefern der Daten an das Computersystem ausgebildet ist.

**19.** Kombination nach Anspruch 18, wobei die in dem Speicher gespeicherten Daten gemessene Druckprofile von einer Reihe von vorhergehenden Füllvorgängen, optional der zehn vorhergehenden Füllvorgänge, umfassen.

**20.** Kombination nach Anspruch 18 oder Anspruch 19, wobei der unter Druck stehende Treibstofftank ferner einen Temperatursensor aufweist, der ausgebildet ist, Temperaturmessungen des unter Druck stehenden Treibstofftanks aufzunehmen, und wobei die RFID-Vorrichtung optional ausgebildet ist, die Temperaturmessergebnisse zu übertragen, und wobei der RF-Empfänger optional ausgebildet ist, die Temperaturmessergebnisse zu empfangen und die Temperaturmessergebnisse an das Computersystem zu liefern.

**21.** Unter Druck stehender Treibstofftank (100; 600), der zum Verbinden mit einer Füllstation nach Anspruch 16 ausgebildet ist und der aufweist:

einen Behälter zum Aufnehmen einer unter Druck stehenden Treibstoffmenge (106), wobei es sich bei dem Treibstoff um ein Fluid handelt;
einen Einlass (110; 610), der so ausgebildet ist, dass der Behälter gefüllt werden kann; und der **gekennzeichnet ist durch**:

eine Speichereinrichtung (550; 650), in der Daten gespeichert sind, die ein Referenzdruckprofil (420) definieren, das eine erwartete Reihe von Druckwerten im Inneren des unter Druck stehenden Treibstofftanks zu verschiedenen Zeitpunkten während eines Füllvorgangs angibt, wenn der unter Druck stehenden Treibstofftank mit Treibstoff gefüllt wird, wobei es sich bei dem Treibstoff um ein Fluid handelt; und
einen Transmitter (550; 650), der zum Übertragen von Daten ausgebildet ist, die das Referenzdruckprofil definieren, und der optional ferner eines von Folgendem aufweist:

einen Temperatursensor (520; 620), der ausgebildet ist, Temperaturmesswerte des unter Druck stehenden Treibstofftanks aufzunehmen, wobei der Transmitter ausgebildet ist, die Temperaturmessergebnisse zu übertragen; und
einen Drucksensor (260), der ausgebildet ist, Druckmesswerte des unter Druck stehenden Treibstofftanks aufzunehmen, wobei der Transmitter ausgebildet ist, die Druckmessergebnisse zu übertragen.

**22.** Fahrzeug, optional Luftfahrzeug, das den unter Druck stehenden Treibstofftank nach Anspruch 21 umfasst.

**Revendications**

**1.** Procédé de contrôle de l'intégrité d'un réservoir de carburant sous pression (100 ; 600) en utilisant des mesures de pression obtenues pendant un processus de remplissage où le réservoir de carburant sous pression est rempli avec du carburant et dans lequel le carburant est un fluide, le procédé comprenant :

l'obtention de mesures de pression indiquant une série de pressions à l'intérieur du réservoir de carburant sous pression à différents instants pendant le processus de remplissage alors que le réservoir de carburant sous pression est rempli avec du carburant, décrivant de ce fait un profil de pression mesuré du processus de remplissage ;
la comparaison du profil de pression mesuré (420) à un profil de pression de référence (410) qui indique une série attendue de pressions à l'intérieur du réservoir de carburant sous pression à différents instants pendant un processus de remplissage où le réservoir de carburant sous pression est rempli avec du carburant, dans lequel le carburant est un fluide, pour déterminer si les profils de pression mesuré et de référence correspondent ; et
l'utilisation de la comparaison pour fournir une indication de l'intégrité du réservoir de carburant sous pression.

**2.** Procédé selon la revendication 1, comprenant la comparaison du profil de pression mesuré au profil de pression de référence pour déterminer si les profils de pression mesuré et de référence correspondent et, (a) la confirmation de l'intégrité du réservoir de carburant sous pression si les profils de pression mesuré et de référence s'avèrent correspondre, ou (b) le rapport d'un problème concernant l'intégrité du réservoir de carburant sous pression si les profils de pression mesuré et de référence s'avèrent ne pas correspondre.

**3.** Procédé selon la revendication 2, comprenant la comparaison du profil de pression mesuré au profil de pression de référence pour déterminer à quel point ils diffèrent et le rapport d'un problème concernant l'intégrité du réservoir de carburant sous pression si les profils de pression mesuré et de référence s'avèrent différer d'une valeur supérieure à un seuil prédéterminé.

**4.** Procédé selon la revendication 2 ou la revendication 3, comprenant la comparaison du profil de pression mesuré au profil de pression de référence pour caractériser la manière dont ils diffèrent et le rapport d'une indication du type de problème concernant l'intégrité du réservoir de carburant sous pression sur la base de la caractéristique de la différence entre les profils de pression mesuré et de référence.

**5.** Procédé selon l'une quelconque des revendications précédentes, dans lequel le profil de pression de référence est un profil de pression mesuré précédemment.

**6.** Procédé selon la revendication 5, dans lequel le profil de pression de référence est déduit d'un ou de plusieurs profils de pression mesurés qui ont été mesurés pendant un processus de remplissage précédent où le réservoir de carburant sous pression est rempli avec du carburant, dans lequel le carburant est un fluide, en option des profils de pression mesurés qui ont été mesurés pendant les dix processus de remplissage précédents.

**7.** Procédé selon l'une quelconque des revendications 1 à 4, dans lequel le profil de pression de référence est calculé, par exemple en utilisant une simulation informatique.

**8.** Procédé selon la revendication 7, dans lequel le profil de pression de référence est calculé pendant le processus de remplissage en utilisant une mesure de la température de la cuve de carburant sous pression et, en option, dans lequel le procédé comprend en outre :

la mise à jour du profil de pression de référence lorsqu'une nouvelle mesure de la température du réservoir de carburant sous pression est reçue,
la comparaison du profil de pression mesuré au profil de pression de référence mis à jour pour déterminer si les profils de pression mesuré et de référence correspondent ; et

l'utilisation de la comparaison pour fournir une indication de l'intégrité du réservoir de carburant sous pression.

9. Procédé selon l'une quelconque des revendications précédentes, comprenant en outre :

le remplissage du réservoir de carburant sous pression avec un carburant ;

la mesure de pressions à l'intérieur du réservoir de carburant sous pression, obtenant de ce fait les mesures de pression ; et

la commande du processus de remplissage sur la base de l'indication de l'intégrité du réservoir de carburant sous pression.

10. Procédé selon l'une quelconque des revendications précédentes, comprenant en outre la récupération d'informations se rapportant au réservoir de carburant sous pression dans un dispositif de mémoire prévu sur le réservoir de carburant sous pression et, en option, la mémorisation de l'indication de l'intégrité du réservoir de carburant sous pression sur le dispositif de mémoire du réservoir de carburant sous pression.

11. Procédé selon l'une quelconque des revendications précédentes, comprenant en outre la mémorisation d'informations se rapportant au réservoir de carburant sous pression provenant d'un dispositif de mémoire (550 ; 650) prévu sur le réservoir de carburant sous pression, les informations correspondant à une indication de l'intégrité du réservoir de carburant sous pression et/ou du profil de pression mesuré.

12. Procédé selon l'une quelconque des revendications précédentes, comprenant en outre la surveillance de la pression au niveau d'une sortie (108 ; 608) du réservoir de carburant sous pression pendant le processus de remplissage.

13. Programme d'ordinateur qui, lorsqu'il est exécuté par un processeur d'ordinateur, amène le processeur d'ordinateur à effectuer un procédé selon l'une quelconque des revendications 1 à 12.

14. Dispositif de mémorisation à mémoire pouvant être lue par un ordinateur sur lequel un programme d'ordinateur selon la revendication 13 est mémorisé.

15. Système informatique (280) programmé pour mettre en oeuvre le procédé de l'une quelconque des revendications 1 à 12.

16. Poste de remplissage (200) pour remplir un réservoir de carburant sous pression (100) avec un carburant (108), comprenant :

le système informatique selon la revendication 15 ;

un réservoir de stockage (250) pour contenir le carburant (106) à délivrer ;

une liaison (220) avec une sortie configurée pour relier le réservoir de stockage à un réservoir de carburant sous pression à remplir par l'intermédiaire de la sortie de la liaison ; et

un régulateur (222 ; 602) configuré pour réguler l'écoulement du carburant du réservoir de stockage vers la sortie ;

et dans lequel

le système informatique est programmé pour mettre en oeuvre le régulateur pour permettre le remplissage du réservoir de carburant sous pression avec le carburant et, en option, pour commander le régulateur sur la base de l'indication de l'intégrité du réservoir de carburant sous pression.

17. Combinaison d'un réservoir de carburant sous pression (100 ; 600) et du poste de remplissage (200) selon la revendication 16, dans laquelle :

le réservoir de carburant sous pression comprend une entrée (110 ; 610) pour un raccordement à la sortie de la liaison, et un capteur de pression (260) pouvant être utilisé pour effectuer les mesures de pression ;

et dans laquelle le poste de remplissage comprend en outre une connexion pour connecter le système informatique au capteur de pression de sorte que le système informatique puisse recevoir les mesures de pression fournies par le capteur de pression.

18. Combinaison selon la revendication 17, dans laquelle le réservoir de carburant sous pression comprend en outre un dispositif RFID comportant une mémoire et un émetteur, la mémoire contenant des données définissant le profil de pression de référence et l'émetteur étant configuré pour émettre les données ; et le poste de remplissage comprend en outre un récepteur RF configuré pour recevoir les données et pour fournir les données au système informatique.

**19.** Combinaison selon la revendication 18, dans laquelle les données mémorisées dans la mémoire comprennent les profils de pression mesurés provenant d'une série de processus de remplissage précédents, en option les dix processus de remplissage précédents.

**20.** Combinaison selon la revendication 18 ou la revendication 19, dans laquelle le réservoir de carburant sous pression comprend en outre un capteur de température configuré pour prendre des mesures de température du réservoir de carburant sous pression, et dans laquelle, en option, le dispositif RFID est configuré pour émettre les mesures de température et dans laquelle le récepteur RF est configuré pour recevoir les mesures de température et pour fournir les mesures de température au système informatique.

**21.** Réservoir de carburant sous pression (100 ; 600) configuré pour être relié à un poste de remplissage selon la revendication 16 et comprenant :

une cuve pour stocker une quantité de carburant (106) sous pression, dans lequel le carburant est un fluide ; une entrée (110 ; 610) configurée pour permettre le remplissage de la cuve ; et **caractérisé par** :

des moyens formant mémoire (550 ; 650) dans lesquels des données sont mémorisées définissant un profil de pression de référence (420) indiquant une série attendue de valeurs de pression à l'intérieur du réservoir de carburant sous pression à différents instants pendant un processus de remplissage lorsque le réservoir de carburant sous pression est rempli avec un carburant, dans lequel le carburant est un fluide ; et un émetteur (550 ; 650) configuré pour émettre les données définissant le profil de pression de référence ; et, en option, comprenant en outre au moins l'un : d'un capteur de température (520 ; 620) configuré pour obtenir des mesures de température du réservoir de carburant sous pression, et dans lequel l'émetteur est configuré pour émettre les mesures de température ; et d'un capteur de pression (260) configuré pour obtenir des mesures de pression du réservoir de carburant sous pression, et dans lequel l'émetteur est configuré pour émettre les mesures de pression.

**22.** Véhicule, en option un véhicule aérien, comprenant le réservoir de carburant sous pression de la revendication 21.

FIG. 1

*FIG. 2*

FIG. 3A

FIG. 3B

*FIG. 4A*

*FIG. 4B*

FIG. 4C

FIG. 4D

FIG. 4E

FIG. 4F

FIG. 5

FIG. 6

EP 2 796 848 B1

Generate any error messages — 702

Error message? — 704

Yes → Exit process — 706

No ↓

Connect flexible hose — 708

Connect low-pressure measurement line — 710

Connect high-pressure measurement line — 712

Form RF-ID link, retrieve data, calculate reference profile — 714

Check low-pressure, high-pressure and temperature measurements — 716

Start filling, instruct visual inspection — 718

Receive low-pressure measurements — 720

In range? — 722
Yes / No

Receive temperature measurement

In range? — 724 / 726
No / Yes

Update reference profile — 728

Receive high-pressure measurement — 730

In range? — 732
No / Yes

Compare data points with latest reference profile — 734

Good integrity?
Yes / No

Stop filling, issue alert — 740

Stop filling — 742

A

*FIG. 7A*

A

| Prompt for results of visual inspection | ~744 |

| Provide report and write data to RF-ID tag | ~746 |

| Disconnect RF-ID link | ~748 |

| Disconnect high-pressure measurement line | ~750 |

| Disconnect low-pressure measurement line | ~752 |

| Disconnect flexible hose | ~754 |

| Exit process | ~756 |

## FIG. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5411004 A
- US 20110308302 A
- US 20080196482 A
- US 8371272 B